# EUROPÄISCHE PATENTSCHRIFT

(11) **EP 1 239 057 B1**
(45) Veröffentlichungstag und Bekanntmachung des Hinweises auf die Patenterteilung: **14.11.2007**
(21) Anmeldenummer: 01105765.0
(22) Anmeldetag: 08.03.2001
(51) Int. Cl.: C23C 18/16, B01D 61/44

(54) **System zur elektrodialytischen Regeneration eines stromlosen Badelektrolyten**
System for the electrolytic regeneration of a bath for electroless plating
Système pour la régéneration d'un bain pour le dépòt chimique

(43) Veröffentlichungstag der Anmeldung: 11.09.2002
(73) Patentinhaber: Enthone Inc., West Haven, Connecticut 06516 (US)
(72) Erfinder: Hadley, John Stuart, 5216 BN 'sHertogenbosch (NL); Verhoeven, Peter Anton Adriaan, 5261 BR Vught (NL); Eberhard Knaak, D-40764 Langenfeld (DE); Noffke Frank, D-42327 Wuppertal (DE)
(74) Vertreter: Stenger, Watzke & Ring

(56) Entgegenhaltungen:
- EP-A- 0 787 829
- DE-C- 19 849 278
- US-A- 3 766 049
- US-A- 5 114 554

## Beschreibung

Die Erfindung betrifft ein System zur elektrodialytischen Regeneration eines stromlosen Badelektrolyten mit einer ersten und einer zweiten, jeweils abwechselnd angeordnete Diluaträume zum Durchleiten des Badelektrolyten und Konzentraträume zum Durchleiten eines Regenerationselektrolyten aufweisenden und mit je zwei Elektroden, einer Anode und einer Kathode, zusammenwirkenden Elektrodialyseeinheiten, wobei in der ersten Elektrodialyseeinheit die Diluaträume von den Konzentraträumen kathodenseitig durch für monovalente Kationen selektiv durchlässige Membranen und anodenseitig durch für sämtliche Anionen selektiv durchlässige Membranen getrennt sind, wobei in der zweiten Elektrodialyseeinheit die Diluaträume von Konzentraträumen kathodenseitig durch für monovalente Anionen selektiv durchlässige Membranen und anodenseitig durch für sämtliche Kationen selektiv durchlässige Membranen getrennt sind, wobei die Diluaträume der ersten Elektrodialyseeinheit mit den Diluaträumen der zweiten Elektrodialyseeinheit über erste Leitungen zum sequentiellen Durchleiten des Badelektrolyten seriell verbunden sind und die Konzentraträume der ersten Elektrodialyseeinheit mit den Konzentraträumen der zweiten Elektrodialyseeinheit über zweite Leitungen zum sequentiellen Durchleiten des Regenerationselektrolyten seriell verbunden sind.

Neben galvanischen Beschichtungsverfahren, bei denen zum Aufbringen einer Metallbeschichtung auf ein Werkstück über in dem Beschichtungsbad eingebrachte Elektroden ein äußerer Strom eingebracht wird, sind sogenannte außenstromlose bzw. stromlose Beschichtungsverfahren (electroless plating) bekannt. Diese Verfahren werden besonders häufig zum Beschichten von nicht leitenden Substraten, beispielsweise Kunststoffteilen, angewendet. Derartige Metallschichten werden dabei aus verschiedentlichen Gründen auf bspw. Kunststoffkörper aufgebracht. Zum einen kann eine metallische Oberfläche aus ästhetischen Gründen angestrebt sein, andererseits kann es auch angestrebt sein, die Materialeigenschaften des so auf ein Substrat aufgebrachten Metalls zu nutzen. Dies können beispielsweise eine verbesserte Korrosionsbeständigkeit sein oder aber die elektrische Leitfähigkeit des verwendeten Materials. So ist es beispielsweise bekannt, Leiterplatten aus Kunststoff (beispielsweise Epoxidharzen) mittels außenstromloser bzw. stromloser Beschichtungstechniken mit Leiterbahnen zu versehen.

Insbesondere wird häufig Nickelmetall mittels der stromlosen Beschichtungstechnologie abgeschieden.

Um bei einer solchen Beschichtungstechnik die im Elektrolyt enthaltenen Metallionen zu elementarem Metall zu reduzieren muß dem Elektrolyten ein entsprechendes Reduktionsmittel, welches während der Reaktion selbst oxidiert wird, beigegeben werden. Im Falle eines stromlosen Nickelbades werden hierzu Hypophosphitionen beigegeben. Diese reduzieren die im Abscheidebad enthaltenen Nickelionen zu elementarem Nickel und werden dabei selbst zu Orthophosphitionen oxidiert. Die im Falle eines stromlosen Nickelbades ablaufende Reaktionsgleichung verläuft dabei nach folgendem Schema:

NiSO₄+6NaH₂PO₂→Ni+2H₂+2P+4NaH₂PO₃+Na₂SO₄

Während mit fortschreitender Metallisierung dem Elektrolyten ständig Nickelionen entzogen werden, welche sich als elementares Nickel auf der zu beschichtenden Oberfläche niederschlagen, werden gleichzeitig fortlaufend Hypophosphitionen zu Orthophosphitionen oxidiert. Mit anderen Worten, in dem Elektrolyten sinken zum einen die Konzentration der darin gelösten Nickelionen und die Konzentration der im Elektrolyten enthaltenen Hypophosphitionen, zum anderen steigt die Konzentration der im Elektrolyten enthaltenen Orthophosphitionen. Der Elektrolyt wird somit "verbraucht". Mit zunehmender Standzeit des Elektrolyten nimmt folglich die Güte eines mit der Verwendung eines solchen Elektrolyten erzielten Beschichtungsergebnisses ab. Der Elektrolyt kann also nur für eine bestimmte Anzahl von Beschichtungsdurchläufen verwendet werden. Danach ist der Elektrolyt entweder zu ersetzen oder mittels geeigneter Hilfsmittel zu regenerieren. Im Falle des Nickelabscheidebades bedeutet Regenerieren zumindest das Entziehen der als Reaktionsprodukte anfallenden Orthophosphitionen sowie ggf. ein Zufügen voneinander verbrauchter Nickelionen und verbrauchter Hypophosphitionen.

Neben der in situ Fällung unerwünschter Ionen in schwerlöslichen Verbindungen und der Nachdosierung von benötigten und im Verlaufe der Badstandzeit verbrauchten Ionen ist es bekannt, zur Regeneration stromloser Abscheidebäder elektrodialytische Verfahren einzusetzen. Bei solchen Verfahren werden in voneinander durch Membranen getrennte Räume der verbrauchte Badelektrolyt und ein zumindest die dem verbrauchten Badelektrolyten zur Regeneration zu entziehenden Ionen aufnehmender Regenerationselektrolyt geführt. Dabei kann der Regenerationselektrolyt auch dem Badelektrolyten zuzuführende Ionen enthalten. Über in einer Elektrodialyseeinrichtung vorhandene Elektroden wird durch eine Elektrodialyseeinheit Strom geleitet und ein lonenfluß angeregt. Durch eine geschickte Auswahl der zwischen den mit dem Badelektrolyten durchflossenen, sogenannten Diluaträumen und den mit dem Regenerationselektrolyten durchflossenen, sogenannten Konzentraträumen angeordneten Membranen kann ein gezielter Übergang von Ionen aus dem in den Diluaträumen geführten Badelektrolyten in den in den Konzentraträumen geführten Regenerationselektrolyten und umgekehrt erzielt werden.

Ein Beispiel eines solchen Elektrodialysesystems ist in der deutschen Patentschrift DE 198 49 278 C1 gegeben. Bei dem in dieser Druckschrift gezeigten System werden zwei getrennte Elektrodialyseeinheiten verwendet, welche jeweils durch Membranen voneinander getrennte Diluat- und Konzentraträumen sowie ein Elektrodenpaar, eine Anode und eine Kathode, aufweisen. Die Diluaträume einer ersten Elektrodialyseeinheit sind dabei von den Konzentraträumen dieser Einheit kathodenseitig durch monoselektive Kationentauschermembranen und anodenseitig durch Anionentauschermembrane getrennt. In der zweiten, ebenfalls Diluat- und Konzentraträume sowie eine Anode und eine Kathode aufweisenden Elektrodialyseeinheit sind die Diluaträume von den Konzentraträumen kathodenseitig durch monoselektive Anionentauschermembranen und anodenseitig durch Anionentauschermembranen getrennt. Zur Regeneration des Badelektrolyten wird dieser aufgeteilt in zwei Hauptströme parallel durch die Diluaträume der ersten und der zweiten Elektrodialyseeinheit geleitet. Gleichermaßen wird der Regenerationselektrolyt zu Teilströmen aufgeteilt parallel durch die Konzentraträume der ersten sowie der zweiten Elektrodialyseeinheit geführt. In der ersten Elektrodialyseeinheit werden dem Badelektrolyten dabei sowohl Orthophosphit- als auch Hypophosphitionen entzogen. Im Badelektrolyten noch vorhandene Nickelionen verbleiben im Elektrolyten. Dem zweiten Teilstrom des Badelektrolyten, werden in den Diluaträumen der zweiten Elektrodialyseeinheit, aus dem Regenerationselektrolyten Hypophosphitionen zugeführt.

Dieses Verfahren arbeitet mit einer geringen Effizienz pro Durchgang, und es ist erforderlich, den zu reinigenden Badelektrolyten mehrfach in einem Kreislauf durch das Elektrodialysesystem zu führen, um einen angestrebten Regenerationsgrad zu erzielen.

Ein zweites, aus dem Stand der Technik bekanntes System ist in der EP 0 787 829 A1 gezeigt. Auch das in dieser Druckschrift gezeigte Elektrodialysesystem setzt sich aus zwei Elektrodialyseeinheiten zusammen, welche jeweils Diluat- und Konzentraträume sowie eine Anode und eine Kathode aufweisen. In ihrem Aufbau gleicht die erste Elektrodialyseeinheit dieser Druckschrift der Elektrodialyseeinheit der oben zitierten deutschen Patentschrift. Auch hier sind die Diluaträume der ersten Elektrodialyseeinrichtung von angrenzenden Konzentraträumen kathodenseitig durch eine monovalente Kationentauschermembran und anodenseitig durch eine Anionentauschermembran getrennt. Jedoch ist bei diesem Elektrodialysesystem in der zweiten Elektrodialyseeinheit eine von der aus der obigen deutschen Patentschrift bekannten Anordnung abweichende Anordnung vorgesehen. Hier sind Diluaträume von angrenzenden Konzentraträumen kathodenseitig durch eine Kationentauschermembran und anodenseitig durch eine monovalente Anionentauschermembran getrennt. Bei dem aus dieser Druckschrift bekannten System werden die einzelnen Elektrodialyseeinheiten sequentiell sowohl von dem Regenerationselektrolyten als auch von dem Badelektrolyten in einer Richtung durchströmt. In der ersten Elektrodialyseeinheit werden dem Badelektrolyten Hypo- und Orthophosphitionen entzogen, wobei in einer zweiten Stufe dem Badelektrolyten in der zweiten Elektrodialyseeinheit Hypophosphitionen wieder zugeführt werden. Das aus der EP 0 787 829 A1 bekannte System bildet dabei den Ausgangspunkt dieser Erfindung gemäß dem Oberbegriff des Hauptanspruchs 1.

Das aus der europäischen Offenlegungsschrift bekannte System erweist sich jedoch dahingehend als nachteilig, daß es in seinem Aufbau unwirtschaftlich ist und daß die dort verwendeten Elektroden der Elektrodialyseeinheiten nicht ausreichend vor schädlichen Einflüssen der in den Elektrolyten enthaltenen Chemikalien geschützt sind.

Ausgehend von diesem bekannten Stand der Technik liegt der Erfindung daher die **Aufgabe** zugrunde, ein Elektrodialysesystem der eingangs genannten Art dahingend weiter zu entwickeln, daß es im Aufbau kostengünstiger ist und den verwendeten Elektroden eine hohe Standzeit ermöglicht wird.

Erfindungsgemäß besteht die **Lösung** dieser Aufgabe darin, daß für die Elektroden eigene, durch Membranen von angrenzenden Räumen abgetrennte, über dritte Leitungen mit einem Spülektrolyt durchströmbare Elektrodenräume angeordnet sind, und daß in einem an Räume beider Elektrodialyseeinrichtungen angrenzenden Elektrodenraum eine gemeinsame, für beide Elektrodialyseeinrichtungen wirkende Elektrode angeordnet ist.

Das erfindungsgemäße System zur elektrodialytischen Regeneration eines stromlosen Badelektrolyten ist also mit Vorteil so aufgebaut, daß zwei sequentiell nacheinander durchflossene Elektrodialyseeinheiten eine Elektrode gemeinsam nutzen, daß also für den Aufbau der beiden Elektrodialyseeinheiten lediglich drei Elektroden verwendet werden. Die gemeinsam genutzte Elektrode kann dabei eine Anode oder eine Kathode sein. Die Verwendung lediglich dreier Elektroden zum Aufbau des erfindungsgemäßen Systems spart den Einsatz einer ansonsten notwendigen vierten Elektrode und verringert damit den Kostenaufwand bei der Herstellung eines solchen Systems. Des weiteren kann das aus den einzelnen Elektrodialyseeinheiten gebildete Gesamtsystem in kompakter und platzsparender Weise aufgebaut werden. An die nebeneinander geschichteten Konzentrat- bzw.

Diluaträume der ersten Dialyseeinheit schließen sich unter Zwischenschaltung eines Elektrodenraumes, in dem sich die von beiden Elektrodialyseeinheiten gemeinsam genutzte Elektrode befindet, die nebeneinander angeordnet Diluatund Konzentraträume der zweiten Elektrodialyseeinheit an. Die Zahl der pro Elektrodialyseeinheit vorgesehenen Diluat- bzw. Konzentraträume ist dabei nicht beschränkt, sie wird an den im Einsatzfall erforderlichen Durchsatz des zu reinigenden Badelektrolyten angepaßt. Entscheidend ist lediglich, daß der durch die Diluaträume der ersten Elektrodialyseeinheit geführte Badelektrolyt nach dem Durchlauf durch die erste Elektrodialyseeinheit die Diluaträume der zweiten Elektrodialyseeinheit passiert.

Die Einbindung von von den Konzentrat- bzw. Diluaträumen getrennten Elektrodenräumen, welche mit einem eigenen Spülelektrolyten durchströmbar sind, bewirkt eine Trennung der Elektroden von den im Badelektrolyten bzw. im Regenerationselektrolyten gelösten Ionen, so daß diese keine schädigende Wirkung auf die Elektroden ausüben können. Die Elektrodenräume werden statt dessen mit einem Spülelektrolyten gespült, der einerseits sicherstellt, daß ein Stromfluß aus den Elektrodenräumen in die Konzentrat- bzw. Diluaträume der jeweiligen Elektrodialyseeinheit erfolgen kann, der andererseits aber die Lebensdauer bzw. Standzeit der eingesetzten Elektroden deutlich erhöht.

Als in den Elektrodenräumen befindliche Spülelektrolyten werden gemäß einer vorteilhaften Weiterbildung der Erfindung wässrige Lösungen von Natriumsulfat, Kaliumsulfat oder Natriumphosphat vorgeschlagen. Diese liegen gemäß einer weiteren vorteilhaften Weiterbildung der Erfindung in einer Konzentration von zwischen 1 g/l bis 30 g/l vor. Ein Spülelektrolyt der angegebenen Zusammensetzung in der angegebenen Konzentration zeigt dabei gute Leiteigenschaft, ist jedoch in der Konzentration der gelösten Ionen noch nicht so hoch, als daß sich schädigende Auswirkungen auf die Membranen bzw. Elektroden zeigen. Auch weist der Elektrolyt eine für ein Pumpen des Elektrolyten ausreichend hohe Viskosität auf.

Gemäß einem weiteren vorteilhaften Vorschlag der Erfindung weist das System zum Zuführen des Badelektrolyten und/oder des Regenerationselektrolyten in Diluat- bzw. Konzentraträume mindestens einer Elektrodialyseeinheit ausgehend von einer Hauptzuführungsleitung parallele Leitungen zu den einzelnen Diluatbzw. Konzentraträume auf. Die Elektrolytströme des Badelektrolyten und/oder des Regenerationselektrolyten werden zur Durchleitung durch eine Elektrodialyseeinheit in Teilströme aufgeteilt und parallel durch mehrere Diluaträume bzw. Konzentraträume dieser Einheit geführt. Nach dem Durchlauf durch die einzelnen Räume werden die Teilströme wieder gesammelt und getrennt nach Badelektroyt sowie Regenerationselektroyt der weiteren Verwendung, beispielsweise der zweiten Elektrodialyseeinheit oder einem Sammelbehälter zugeführt. Durch die Parallelführung der zu Teilströmen aufgeteilten Elektrolytströme durch mehrere Diluat- bzw. Konzentraträume einer Elektrodialyseeinheit kann ein höherer Durchsatz erreicht werden. Die wirksame lonenaustauschfähigkeit zwischen einem Diluatraum und einem angrenzenden Konzentratraum wird mit der Anzahl der verwendeten Diluat- bzw. Konzentraträume multipliziert.

Gemäß einer weiteren vorteilhaften Weiterbildung der Erfindung wird eine Kreislaufleitung zum Führen des Badelektrolyten durch das Elektrodialysesystem vorgeschlagen. Dabei kann mit Vorteil ein Sammelbehälter vorgesehen sein, in dem der zu regenerierende Badelektrolyt gespeichert wird und welchem er entnommen, in dem Elektrodialysesystem regeneriert und schließlich wieder in den Behälter zugeführt wird. Als Behälter kann dabei auch der Badbehälter gewählt werden, in dem die stromlose Beschichtung durchgeführt wird. Bei einer solchen Konfiguration erfolgt die Regeneration des Badelektrolyten quasi in situ, indem dem in dem Beschichtungsbehälter vorhandenen Badelektrolyten immer ein gewisser Anteil entnommen und mit Hilfe des Regenerationssystems regeneriert wird. Der so regenerierte Anteil des Badelektrolyt wird dem Beschichtungsbehälter wiederum zugeführt und vermengt sich dort mit dem Restelektrolyten. Abhängig von den Anforderungen, die an den Badelektrolyten gestellt werden, kann die erforderliche Regenerationsrate über den Volumenstrom des Badelektrolyten pro Zeiteinheit durch das Elektrodialysesystem gesteuert werden. Werden an die "Reinheit" des im Prozeß befindlichen Badelektrolyten höhere Anforderungen gestellt, so ist bei gleichem Behältervolumen des Badbehälters ein höherer Volumenstrom pro Zeiteinheit durch das Elektrodialysesystem einzustellen. Entsprechend müssen die Elektrodialyseeinheiten des Elektrodialysesystems für einen höheren Durchsatz ausgelegt werden. Sie können zu diesem Zweck beispielsweise eine höhere Anzahl an Diluat- bzw. Konzentraträumen aufweisen, als dies für einen niedrigeren Elektrolytdurchsatz erforderlich wäre.

Da der Elektrolyt zur stromlosen Metallbeschichtung üblicherweise bei einer erhöhten Arbeitstemperatur verwendet wird, wird gemäß einer weiteren vorteilhaften Weiterbildung der Erfindung vorgeschlagen, daß zumindest im Vorlauf des Elektrodialysesystems, vorzugsweise aber auch im Rücklauf, ein Wärmetauscher vorgesehen ist. Mit Hilfe des im Vorlauf, also der Zuleitung zu der ersten Elektrodialyseeinheit, des Systems vorgesehenen Wärmetauschers wird über ein Kühlmedium, beispielsweise Kühlwasser, der Elektrolyt abgekühlt. So werden die empfindlichen Komponenten der Elektrodialyseeinheit, beispielsweise die Membranen, nicht durch einen zu heißen Elektrolyten beschädigt. Mit einem im Rücklauf des Elektrodialysesystems, also der Ableitung für den Badelektrolyten aus der zweiten Elektrodialyseeinheit installierten Wärmetauscher wird der nunmehr auf einer Temperatur unterhalb der Badbetriebstemperatur befindliche Badelektrolyt wieder vorerwärmt, bevor der dem Sammelbehälter, insbesondere dem Badbehälter, wieder zugeführt wird. Hierbei können die beiden verwendeten Wärmetauscher so geschaltet sein, daß das in dem Zulauf des Systems befindlichen Wärmetauscher beim Abkühlen des Badelektrolyten erwärmte Kühlmedium zum Erwärmen des nunmehr erkalteten Badelektrolyten im Rücklauf des Systems verwendet wird.

Um das Eindringen von Partikeln in die Elektrodialyseeinheiten zu vermeiden, ist gemäß einer weiteren vorteilhaften Weiterbildung der Erfindung vorgesehen, einen Filter im Vorlauf des Systems, also in der Zuleitung für den Badelektrolyten zu der ersten Elektrodialyseeinheit, anzuordnen. Dieser filtert Partikel aus dem Badelektrolyten, welche sich darin abgesetzt haben können, und verhindert somit, daß die empfindlichen Membranen zwischen den einzelnen Räumen der Elektrodialyseeinheit zusetzen. Hierzu sollte die Größe der mit dem Filter abgefangenen Partikel klein genug, der Filter also fein genug sein. Hierzu kann unter anderem eine Querstromfiltration (Mikro- oder Nanofiltration) verwendet werden.

Gemäß einer weiteren vorteilhaften Weiterbildung der Erfindung ist bei dem System auch für die Führung des Regenerationselektrolyten ein Kreislauf installiert. In diesem Kreislauf befindet sich vorzugsweise, wie gemäß einer weiteren vorteilhaften Weiterbildung der Erfindung vorgesehen, ein Vorratsbehälter, aus dem der Regenerationselektrolyt der ersten Elektrodialyseeinheit zugeleitet wird und in den der Regenerationselektrolyt aus der zweiten Elektrodialyseeinheit abfließt. In dem Sammelbehälter kann der Regenerationselektrolyt in seiner Zusammensetzung kontrolliert auf die Bedürfnisse der Regeneration eingestellt werden. So können dem Regenerationselektrolyten die als Abfallprodukte aus dem Badelektrolyten aufgenommenen Orthophosphitionen beispielsweise durch Fällen entzogen werden. Zur Einstellung eines optimalen ph-Wertes können Säuren bzw. Laugen zugegeben werden. Außerdem können optional dem Badelektrolyten als Verbrauchsmaterial zugeführte Nickelionen sowie Hypophosphitionen an dieser Stelle beigegeben werden.

Schließlich ist es gemäß einer weiteren vorteilhaften Weiterbildung der Erfindung vorgesehen, auch für den Spülelektrolyten für die Elektrodenräume einen Kreislauf einzurichten. Auch für diesen Elektrolyten kann vorzugsweise ein Sammebehälter vorgesehen sein, aus dem der Spülelektrolyt für die Elektrodenräume die einzelnen Elektrodenräume seriell durchströmt und in den der Spülelektrolyt am Ende wieder zurückgeführt wird. Da aufgrund der an den Elektroden auftretenden Katalyse von Wasser zu Wasserstoff und Sauerstoff dem Spülelelektrolyten fortwährend Wasser entzogen wird, kann an dieser Stelle, also an dem Sammelbehälter für den Spülelektrolyten diesem bedarfsweise Wasser zugegeben werden. Hierzu kann ein Zulauf vorgesehen sein.

Weitere Merkmale und Vorteile der Erfindung ergeben sich aus der nachfolgenden Beschreibung eines in der einzigen beigefügten Figur gezeigten Ausführungsbeispiels eines erfindungsgemäßen Systems zur elektrodialytischen Regeneration eines stromlosen Nickelelektrolyten.

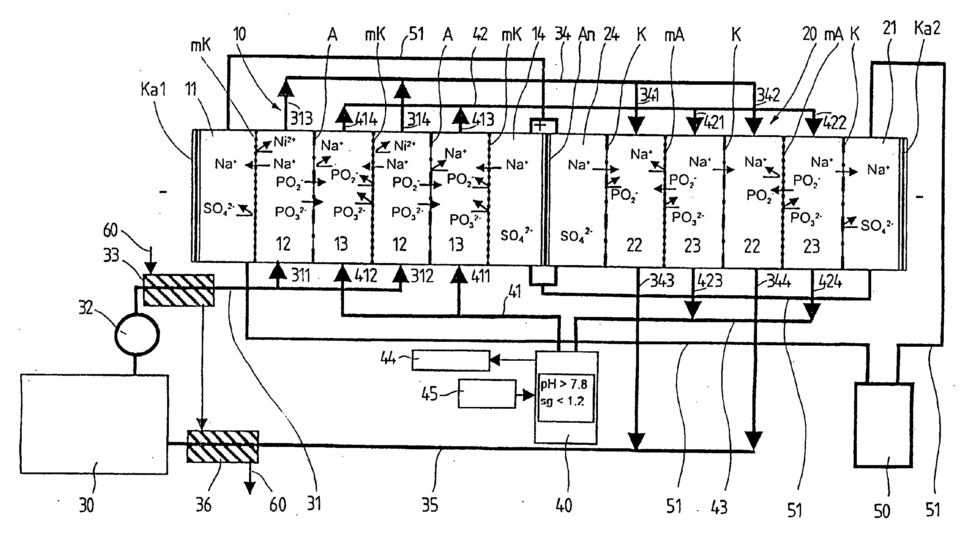

In der Figur ist ein System zur elektrodialytischen Regeneration eines stromlosen Badelektrolyten gezeigt. Kernbestandteil des Systems sind zwei Elektrodialyseeinheiten 10 sowie 20. Die erste Elektrodialyseeinheit 10, in der Figur links dargestellt, weist eine Kathode Ka 1, eine Anode An sowie mehrere dazwischen angeordnete, durch Membranen voneinander abgetrennte Räume 11 bis 14 auf. Im einzelnen sind dies der Kathodenraum 11, die Diluaträume 12, die Konzentraträume 13 sowie der Anodenraum 14. An den Kathodenraum 11 schließt sich anodenseitig ein erster Diluatraum 12 an und ist von dem Anodenraum 11 mittels einer für monovalente Kationen durchlässigen Membran mK getrennt. Weiter in Richtung der Anode schließen sich an den ersten Diluatraum 12 jeweils abwechselnd Konzentrat- und Diluaträume 13 bzw. 12 an. Die Konzentraträume 13 sind von den Diluaträumen 12 dabei jeweils kathodenseitig durch eine für sämtliche Anionen durchlässige Membran A sowie anodenseitig durch eine für monovalente Kationen durchlässige Membran mK getrennt. Die Zahl der Diluatund Konzentraträume 12 bzw. 13 der ersten Elektrodialyseeinheit 10 ist in dem gezeigten Ausführungsbeispiel auf jeweils zwei beschränkt. Es können jedoch je nach Bedarf auch mehr als jeweils zwei derartige Räume vorgesehen sein. Anodenseitig endet die Abfolge aus Diluat- und Konzentraträumen 12 bzw. 13 mit einem Konzentratraum 13, an den sich ein Anodenraum 14 anschließt. Der letzte Konzentratraum 13 ist von dem Anodenraum 14 mittels einer für monovalente Kationen selektiv durchlässigen Membran mK getrennt.

In der Zeichnung ausgehend von der Anode An nach rechts erstreckt sich eine zweite Elektrodialyseeinheit 20. Diese nutzt als Anode dieselbe Anode An wie die erste Elektrodialyseeinheit 10. Weiterhin weist die zweite Elektrodialyseeinheit 20 eine eigene Kathode Ka 2 auf. Zwischen der Anode An und der Kathode Ka 2 befinden sich verschiedene, durch Membrane abgetrennte Räume. Dies sind beginnend mit der Anode der Anodenraum 24, Diluaträume 22, Konzentraträume 23 sowie der Kathodenraum 21. Der Anodenraum 14 der ersten Elektrodialyseeinheit 10 und der Anodenraum 24 der zweiten Elektrodialyseeinheit 20 bilden zusammen einen gemeinsamen Anodenraum. In diesem kann die Anode An eine Trennwand sein, sie kann aber auch strömungstechnische Verbindungen zwischen den Teilräumen 14 und 24 des Anodenraumes belassen. Diluaträume 22 und Konzentraträume 23 sind aneinander angrenzend und abwechselnd zueinander angeordnet. In dem gezeigten Ausführungsbeispiel sind in der zweiten Elektrodialyseeinheit 20 je zwei Diluaträume 22 und Konzentraträume 23 angeordnet. Es können jedoch auch mehr als zwei Konzentrat- bzw. Diluaträume 22 bzw. 23 vorgesehen sein. Dabei hängt die Wahl der Anzahl der Diluat- bzw. Konzentraträume 22 bzw. 23 von dem pro Zeiteinheit erforderlichen Volumendurchsatz des Elektrodialysesystems ab.

In der zweiten Elektrodialyseeinrichtung 20 ist der Anodenraum 24 von einem angrenzenden Diluatraum 22 durch eine für Kationen durchgängige lonentauschermembran K abgetrennt. An den ersten Diluatraum 22 schließt sich ein Konzentratraum 23 an, welcher anodenseitig von dem Diluatraum mittels einer selektiv für monovalente Anionen durchlässigen lonentauschermembran mA und kathodenseitig von einem weiteren Diluatraum 22 mittels einer für sämtliche Kationen durchlässigen lonentauschermembran K getrennt ist. Auf gleiche Weise sind sämtliche Konzentraträume der zweiten Elektrodialyseeinheit 20 durch eine für monovalente Anionen selektiv durchlässigen lonentauschermembran mA und kationenseitig durch eine für sämtliche Kationen durchlässigen lonentauschermembran K getrennt. An den in der Figur rechts gezeigten, letzten Konzentratraum 23 schließt sich durch diesen von einer für sämtliche Kationen durchlässigen lonentauschermembran K getrennt der Kathodenraum 21 an.

Weiterhin sind in der schematischen Darstellung der Figur verschiedene Elektrolytkreisläufe zu erkennen. In einem Speicherbehälter 30 befindet sich der zu regenerierende Badelektrolyt. Dieser wird über eine Vorlaufleitung 31 den Diluaträumen 12 der ersten Elektrodialyseeinheit 10 zugeführt. In die Vorlaufleitung 31 sind dabei der Elektrodialyseeinheit 10 vorgeschaltet ein Partikelfilter 32 sowie ein Wärmetauscher 33 angeordnet. In dem Partikelfilter 32 werden in dem Elektrolyten gegebenenfalls enthaltene Schwebstoffe ausgefiltert, so daß diese nicht die empfindlichen Poren der in den Elektrodialyseeinheiten 10 sowie 20 enthaltenen Membranen verstopfen und diese damit unbrauchbar machen können. In dem gezeigten Ausführungsbeispiel wird bevorzugtermaßen ein Partikelfilter 32 verwendet, welcher Teilchengrößen von > 10µm ausfiltert. An den Partikelfilter 32 schließt sich in der Vorlaufleitung 31 der Wärmetauscher 33 an. Hinter dem Wärmetauscher 33 verzweigt sich die Vorlaufleitung 31 in einzelne Verteilerleitungen 311 und 312, welche jeweils in einen eigenen Diluatraum 12 der ersten Elektrodialyseeinheit 10 münden. Weiterhin ist zu erkennen, daß aus den Diluaträumen 12 Sammlerleitungen 313 sowie 314 austreten, welche in einer Überströmleitung 34, mündet, die die Diluaträume 12 der ersten Elektrodialyseeinheit 10 mit den Diluaträumen 22 mit der zweiten Elektrodialyseeinheit 20 verbindet.

Ausgehend von der Überströmleitung 34 führen Verteilerleitungen 341, 342 in die Diluaträume 22 der zweiten Elektrodialyseeinheit 20. Aus den Diluaträumen 22 der zweiten Elektrodialyseeinheit 20 führen wiederum Sammlerleitungen 343, 344 heraus, welche in eine Rücklaufleitung 35 münden. Die Rücklaufleitung 35 schließlich führt über einen Wärmetauscher 36 wieder zurück in den Speicherbehälter 30. Das beschriebene Leitungssystem aus Vorlaufleitung 31, Verteilerleitungen 311, 312, Diluaträumen 12, Sammlerleitungen 313, 314, Überströmleitung 34, Verteilerleitungen 341, 342, Diluaträumen 22, Sammlerleitungen 343, 344 sowie Rücklaufleitung 35 bildet zusammen mit dem Speicherbehälter 30 einen ersten Kreislauf für den zu regenerierenden Badelektrolyten.

Ein zweiter Elektrolytkreislauf wird nunmehr ausgehend von einem Speicherbehälter 40 für den Regenerationselektrolyten beschrieben. Ausgehend von dem Speicherbehälter 40 führt eine Vorlaufleitung 41 zu der ersten Elektrodialyseeinheit 10. Über an die Vorlaufleitung 41 angeschlossene Verteilerleitungen 411 und 412 sind die Konzentraträume 13 mit der Vorlaufleitung 41 verbunden. Aus den Konzentraträumen 13 der ersten Elektrodialyseeinheit 10 führen Sammlerleitungen 413, 414 heraus zu einer Überströmleitung 42. Diese verbindet die Konzentraträume 13 der ersten Elektrodialyseeinheit 10 mit den Konzentraträumen 23 der zweiten Elektrodialyseeinheit 20. Hierzu sind an die Überströmleitung 43 Verteilerleitungen 421, 422 angeschlossen, welche die Überströmleitung 42 mit den Konzentraträumen 23 verbinden. Aus den Konzentraträumen heraus führen Sammlerleitungen 423, 424, welche in einer Rücklaufleitung 43 münden. Die Rücklaufleitung 43 schließlich führt zurück in den Speicherbehälter 40 und schließt somit den Kreislauf.

Ein dritter Leitungskreislauf geht aus von einem Speicherbehälter 50. In diesem Speicherbehälter befindet sich der Spülelektrolyt für die Elektrodenräume 11, 14, 24 sowie 21. Ausgehend von dem Speicherbehälter 50 ist eine Ringleitung 51 zu erkennen, welche in der Figur nach links zunächst in den Kathodenraum 11, dann in die Anodenräume 14 und 24 und schließlich in den Kathodenraum 21 mündet, bevor sie zu dem Speicherbehälter 50 zurückführt.

In der Figur nicht dargestellt, können in allen drei gezeigten Leitungskreisläufen geeignete Elektrolytfördermittel, beispielsweise Pumpen, angeordnet sein, um so für den erwünschten Durchsatz zu sorgen. Über die Einstellung der Förderleistung solcher Pumpen oder anderer geeigneter Elektrolytfördermittel oder über geeignete Flußregler können Durchsatzleistungen in Durchsatzvolumina pro Zeiteinheit eingestellt werden.

Zur Regneration eines Badelektrolyten aus dem Speicherbehälter 30 arbeitet das System wie folgt:

Aus dem Speicherbehälter 30, welcher der zur stromlosen Beschichtung genutzte Beschichtungsbehälter sein kann, wird der Badelektrolyt über die Vorlaufleitung 31 durch den Partikelfilter 32 und den Wärmetauscher 33 den Diluaträumen 12 der ersten Elektrodialyseeinheit 10 zugeführt. Dabei wird dem Wärmetauscher über die Kühlwasserleitung 60 Kühlwasser zugeführt, um so den Badelektrolyten von seiner Betriebstemperatur herunterzukühlen. Über die Verteilerleitungen 311 und 312 wird der Badelektrolytstrom in parallele Ströme aufgeteilt und parallel den Diluaträumen 12 zugeführt. Zeitgleich wird über die Vorlaufleitung 41 aus dem Speicherbehälter 40 Regenerationselektrolyt entnommen und über die Verteilerleitungen 411 und 412 den an die Diluaträume 12 angrenzenden Konzentraträumen 13 der ersten Elektrodialyseeinheit 10 zugeführt. Zwischen der Anode An und der Kathode Ka1 wird eine Betriebsspannung angelegt. Durch das so zwischen der Anode An und der Kathode Ka1 aufgebaute elektrische Feld werden in den beiden Elektrolyten enthaltene Ionen zur Migration angeregt. Kationen neigen dabei dazu, sich in Richtung der Kathode Ka1 zu bewegen, Anionen in Richtung der Anode An. Aufgrund der zwischen den einzelnen Räumen angeordneten Membranen werden die Ionen jedoch in ihrer Migration beschränkt, da die monoselektiven Kationentauschermembranen mK sowie die Anionentauschermembranen A nicht für alle Ionen permeabel sind. So können aus einem Diluatraum 12 über die monoselektive Kationentauschermembran mK zu dem benachbarten Konzentratraum 13 lediglich einwertige Kationen durchtreten. Dies sind, wie in der Figur dargestellt, bspw. einwertige Natriumionen. Diese werden so dem Badelektrolyten entzogen. Die zweiwertigen Nickelionen hingegen können die monoselektive Kationentauschermembran mK nicht passieren und verbleiben im Badelektrolyten. Durch die den Diluatraum auf der gegenüberliegenden Seite begrenzende Anionentauschermembran A können sämtliche Anionen, also insbesondere die Hypophosphit- und die Orthophosphitionen hindurchtreten. Diese gelangen so in den benachbarten Konzentratraum 13. Aus den benachbarten Konzentraträumen 13 gelangen über die monoselektive Kationentauschermembran einerseits und über die Anionentauschermembran A andererseits keine weiteren Ionen in den Diluatraum 12 und somit in den Badelektrolyten. Dem Badelektrolyten werden somit in der ersten Elektrodialyseeinheit 10 Hypophosphit- sowie Orthophosphitionen und Natriumionen entzogen. Diese reichern sich in dem Regenerationselektrolyten an.

Nach dem Durchlauf durch die Diluaträume 12 der ersten Elektrodialyseeinheit 10 wird der zu regenerierende Badelektrolyt mittels der Sammlerleitungen 313 und 314 gesammelt und in der Überströmleitung 34 den Diluaträumen 22 der zweiten Elektrodialyseeinheit 20 zugeführt. Über die Verteilerleitungen 341, 342 wird der Badelektrolyt in Teilströmen aufgeteilt den Diluaträumen 22 zugeführt. Gleichzeitig wird auch der Regenerationselektrolyt aus den Konzentraträumen 13 der ersten Elektrodialyseeinheit 10 über die Sammlerleitungen 413, 414, die Überströmleitung 42 und die Verteilerleitungen 421, 422 in parallelen Teilströmen den Konzentraträumen 23 der zweiten Elektrodialyseeinheit 20 zugeführt. Zwischen der von beiden Elektrodialyseeinheiten 10 und 20 gleichzeitig genutzten Anode An und der Kathode Ka2 der zweiten Elektrodialyseeinheit 20 liegt ebenfalls eine Potentialdifferenz an, welche den Aufbau eines elektrischen Feldes über der zweiten Elektrodialyseeinheit 20 bewirkt. Analog zu dem elektrischen Feld in der ersten Elektrodialyseeinheit bewirkt auch das elektrische Feld in der zweiten Elektrodialyseeinheit eine Migration von lonen, wobei Anionen in Richtung der Anode und Kationen in Richtung der Kathode wandern. Auch in der zweiten Elektrodialyseeinheit 20 selektieren Membrane die Migrationsvorgänge der einzelnen Ionen. So wandert aus einem kathodenseitig einem Diluatraum 22 nebengeordneten Konzentratraum 23 einwertiges Hypophosphit durch die zwischen den beiden Räumen 22, 23 angeordnete, monoselektive Anionentauschermembran mA und reichert sich in dem Badelektrolyten an.

Zweiwertige Orthophosphitionen hingegen können die monoselektive Anionentauschermembran mA nicht durchdringen und verbleiben im Regenerationselektrolyten 23. Von den anodenseitig an den Diluatraum angrenzenden Konzentratraum 23 werden dem Badelektrolyten Natriumionen wieder zugeführt, welche ihm zuvor entzogen worden sind. Zudem können dem Badelektrolyten (hier nicht gezeigt) weitere Ionen, beispielsweise Nickelionen als Ersatz für das verbrauchte Nickel zugeführt werden. Auch bezüglich der über die monoselektive Anionentauschermembran mA zugeführte Hypophosphitionen können diese lediglich die in der ersten Elektrodialyseeinheit 10 dem Badelektrolyten entzogenen Ionen sein, es können jedoch auch in dem Regenerationselektrolyten bereits enthaltene, dem Badelektrolyten im Zuge der Regeneration zugeführte Hypophosphitionen sein. Alternativ können zur Anreicherung der im Nickelbad benötigten Nickelionen sowie Hypophosphitionen diese dem Elektrolyten über solche Ionen enthaltende Verbindungen, beispielsweise Nickelsulfat, Nickelhypophosphit oder Natriumhypophosphit direkt zugegeben werden. Nach dem Durchtritt durch die zweite Elektrodialyseeinheit wird der regenerierte Badelektrolyt über die Sammlerleitungen 343, 344 in die Rücklaufleitung 35 gegeben und über den Wärmetauscher 36 zurück zu dem Speicherbehälter 30 geführt. In dem Wärmetauscher 36 wird der Badelektrolyt wieder auf eine erhöhte Temperatur, vorzugsweise nahe seiner Betriebstemperatur gebracht. Hierzu kann beispielsweise das in der Kühlwasserleitung 60 geführte zum Abkühlen des Elektrolyten im ersten Wärmetauscher 33 verwendete Kühlwasser als Wärmemedium verwendet werden.

Auf ähnliche Weise wird der aus den Konzentraträumen 23 der zweiten Elektrodialyseeinheit austretende Regenerationselektrolyt über die Sammelleitungen 423, 424 der Rücklaufleitung 43 zugeführt und schließlich in den Speicherbehälter 40. Mit 44 und 45 ist angedeutet, daß im Speicherbehälter 40 Entnahmen 44 sowie Zugaben 45 zu dem Regenerationselektrolyten erfolgen können. Dies können beispielsweise bezüglich der Entnahme das in dem Regenerationselektrolyt angereicherte "Abfallprodukt" Orthophosphit sein, welches beispielsweise durch Ausfällen oder auf andere Weise aus dem Regenerationselektrolyten entfernt werden kann. Weiterhin kann zur Einstellung des für den Verfahrensablauf günstigen pH-Werts von pH 7,8 eine Lauge, beispielsweise Natriumhydroxid, zugegeben werden.

Während des gesamten Prozesses schließlich wird über die Ringleitung 51 ein Spülektrolyt aus dem Speicherbehälter 50 durch die Elektrodenräume 11, 14, 24 und 21 geführt. Der Spülelektrolyt ist in dem gezeigten Beispiel eine wässrige Natriumsulfatlösung, welche einerseits eine Stromleitung durch die Elektrodenräume ermöglicht, andererseits jedoch keinen schädigenden Einfluß auf die Elektroden, die Kathoden Ka1, Ka2 sowie die Anode An hat.

Mit dem erfindungsgemäßen Verfahren kann einem stromlosen Badelektrolyten auf einfache und effiziente Weise ein unerwünschtes Reaktionsprodukt, bspw. in Form von Orthophosphit, entzogen werden, ohne daß hierbei wertvolle Ionen, wie bspw. Nickelionen, verloren gehen oder die Brauchbarkeit des regenerierten Badelektrolyten auf andere Weise beeinträchtigt wird.

Der erfindungsgemäße Aufbau, bei dem die Elektrodialyseeinheiten 10, 20 so aufgebaut sind, daß sie eine Elektrode (im gezeigten Ausführungsbeispiel die Anode An) gemeinsam nutzen, ermöglicht einen in der Herstellung kostengünstigen und kompakten Aufbau des Elektrodialysesystems. Die Anordnung der Elektroden Ka1, An, Ka2 in mit einem Spülektrolyten durchströmbaren Elektrodenräume 11, 14, 24, 21 schließlich bewirkt eine Erhöhung der Standzeit der Elektroden bei einem gleichbleibend hohen Elektrodialysegrad.

### Bezugszeichenliste

- 10: Elektrodialyseeinheit
- 11: Kathodenraum
- 12: Diluatraum
- 13: Konzentratraum
- 14: Anodenraum

- 20: Elektrodialyseeinheit
- 21: Kathodenraum
- 22: Diluatraum
- 23: Konzentratraum
- 24: Anodenraum

- 30: Speicherbehälter
- 31: Vorlaufleitung
- 32: Partikelfilter
- 33: Wärmetauscher
- 34: Überströmleitung
- 35: Rücklaufleitung
- 36: Wärmetauscher
- 311: Verteilerleitung
- 312: Verteilerleitung
- 313: Sammlerleitung
- 314: Sammlerleitung
- 341: Verteilerleitung
- 342: Verteilerleitung
- 343: Sammlerleitung
- 344: Sammlerleitung

- 40: Speicherbehälter
- 41: Vorlaufleitung
- 42: Überströmleitung
- 43: Rücklaufleitung
- 44: Entnahme
- 45: Zugabe
- 412: Verteilerleitung
- 413: Sammlerleitung
- 414: Sammlerleitung
- 421: Verteilerleitung
- 422: Verteilerleitung
- 423: Sammlerleitung
- 424: Sammlerleitung

- 50: Speicherbehälter
- 51: Ringleitung

- 60: Kühlwasserleitung

- Ka1: Kathode
- Ka2: Kathode
- An: Anode
- A: Anionentauschermembran
- K: Kationentauschermembran

- 411: Verteilerleitung

- mA: monoselektive Anionentauschermembran
- mK: monoselektive Kationentauschermembran

## Patentansprüche

1. System zur elektrodialytischen Regeneration eines stromlosen Badelektrolyten mit einer ersten und einer zweiten jeweils Diluaträume (12, 22) zum Durchleiten des Badelektrolyten und Konzentraträume (13, 23) zum Durchleiten eines Regenerationselektrolyten aufweisenden und mit zwei Elektroden, einer Anode (An) sowie einer Kathode (Ka1, Ka2), zusammenwirkenden Elektrodialyseeinheiten (10, 20), wobei in der ersten Elektrodialyseeinheit (10) Diluaträume (12) von Konzentraträumen (13) kathodenseitig durch für monovalente Kationen selektiv durchlässige Membranen (mK) und anodenseitig durch für sämtliche Anionen selektiv durchlässige Membranen (A) getrennt sind, wobei in der zweiten Elektrodialyseeinheit (20) Diluaträume (22) von Konzentraträumen (23) kathodenseitig durch für monovalente Anionen selektiv durchlässige Membranen (mA) und anodenseitig durch für sämtliche Kationen selektiv durchlässige Membranen (K) getrennt sind, wobei die Diluaträume (12) der ersten Elektrodialyseeinheit (10) mit den Diluaträumen (22) der zweiten Elektrodialyseeinheit (20) über erste Leitungen (313, 314, 34, 341, 342) zum sequentiellen Durchleiten des Badelektrolyten seriell verbunden und die Konzentraträume (13) der ersten Elektrodialyseeinheit (10) mit den Konzentraträumen (23) der zweiten Elektrodialyseeinheit (20) über zweite Leitungen (413, 414, 42, 421, 422) zum sequentiellen Durchleiten des Regenerationselektrolyten seriell verbunden sind, wobei
für die Elektroden (An, Ka1, Ka2) eigene, durch Membranen von angrenzenden Räumen abgetrennte, über dritte Leitungen (51) mit einem Spülektrolyt durchströmbare Elektrodenräume (11, 14, 21, 24) angeordnet sind, und daß in einem an Räume beider Elektrodialyseeinheiten (10, 20) angrenzenden Elektrodenraum (14, 24) eine gemeinsam für beide Elektrodialyseeinheiten (10, 20) wirkende Elektrode (An) angeordnet ist.

2. System nach Anspruch 1, **dadurch gekennzeichnet, daß** die für beide Elektrodialyseeinheiten (10, 20) gemeinsam wirkende Elektrode eine Anode (An) ist.

3. System nach einem der Ansprüche 1 oder 2, **dadurch gekennzeichnet, daß** sich in den Elektrodenräumen ein Spülelektrolyt befindet, der eine wässrige Lösung von Na₂SO₄, K₂SO₄ und/oder Na₂PO₃ ist.

4. System nach Anspruch 3, **dadurch gekennzeichnet, daß** der in den Elektrodenräumen befindliche Spülelektrolyt die angegebenen Stoffe in wässriger Lösung in einer Konzentration von 1 bis 30 g/l aufweist.

5. System nach einem der Ansprüche 1 bis 4, **dadurch gekennzeichnet, daß** zum Durchleiten des Badelektrolyten und/oder zum Durchleiten des Regenerationselektrolyten durch die Diluaträume (12, 22) bzw. Konzentraträume (13, 23) mindestens einer der Elektrodialyseeinheiten (10, 20) diesen Räumen ausgehend von einer Hauptzuführungsleitung parallele Leitungen zugeführt sind.

6. System nach einem der Ansprüche 1 bis 5, **dadurch gekennzeichnet, daß** ein Leitungssystem zum Führen des Badelektrolyten durch die Diluaträume (12, 22) der Elektrodialyseeinheiten (10, 20) im Kreislauf geführt ist.

7. System nach Anspruch 6, **dadurch gekennzeichnet, daß** in dem Leitungskreislauf ein Sammelbehälter (30) für den Badelektrolyten angeordnet ist.

8. System nach einem der Ansprüche 6 oder 7, **dadurch gekennzeichnet, daß** in, dem Kreislauf für den Badelektrolyten mindestens ein Wärmetauscher angeordnet ist.

9. System nach einem der Ansprüche 6 bis 8, **dadurch gekennzeichnet, daß** in dem Leitungssystem zur Führung des Badelektrolyten mindestens ein Filter angeordnet ist.

10. System nach einem der Ansprüche 1 bis 9, **dadurch gekennzeichnet, daß** ein Leitungskreislauf zum Durchleiten des Regenerationselektrolyten durch Konzentraträume (13, 23) der ersten sowie der zweiten Elektrodialyseeinheit (10, 20) im Kreislauf geführt ist.

11. System nach Anspruch 10, **dadurch gekennzeichnet, daß** das Leitungssystem zum Führen des Regenerationselektrolyten einen Sammelbehälter (40) aufweist.

12. System nach einem der Ansprüche 1 bis 11, **dadurch gekennzeichnet, daß** zur Durchleitung des Spülelektrolyten durch die Elektrodenräume (11, 14, 21, 24) ein Leitungskreislauf angeordnet ist.

## Claims

1. System for the electrodialytic regeneration of a currentless bath electrolyte comprising a first and a second electrodialysis unit (10, 20) each having diluate compartments (12, 22) through which the bath electrolyte is passed and concentrate compartments (13, 23) through which a regeneration electrolyte is passed, and co-operating with two electrodes, an anode (An) and a cathode (Ka1, Ka2), wherein in the first electrodialysis unit (10) the diluate compartments (12) are separated from the concentrate compartments (23) on the cathode side by membranes (mK) which are selectively permeable to monovalent cations and on the anode side by membranes (A) which are selectively permeable to all anions, wherein in the second electrodialysis unit (20) the diluate compartments (22) are separated from the concentrate compartments (23) on the cathode side by membranes (mA) which are selectively permeable to monovalent anions and on the anode side by membranes (K) which are selectively permeable to all cations, wherein the diluate compartments (12) of the first electrodialysis unit (10) are serially connected to the diluate compartments (22) of the second electrodialysis unit (20) via first lines (313, 314, 34, 341, 342) through which the bath electrolyte is sequentially passed, and the concentrate compartments (13) of the first electrodialysis unit (10) are serially connected to the concentrate compartments (23) of the second electrodialysis unit (20) via second lines (413, 414, 42, 421, 4222) through which the regeneration electrolyte is sequentially passed, wherein the electrodes (An, Ka1, Ka2) are disposed in their own electrode compartments (11, 14, 21, 24) which are separated from adjacent compartments by membranes and through which a rinsing electrolyte can flow via third lines (51), and wherein in one electrode compartment (14, 24) adjacent to the compartments of both electrodialysis units (10, 20) there is disposed an electrode (An) which is jointly effective for both electrodialysis units (10, 20).

2. System as claimed in Claim 1, **characterised in that** the electrode which is jointly effective for both electrodialysis units (10, 20) is an anode (An).

3. System as claimed in any one of Claims 1 or 2, **characterised in that** the electrode compartments contain a rinsing electrolyte which is an aqueous solution of Na₂SO₄, K₂SO₄ and/or Na₂PO₃.

4. System as claimed in Claim 3, **characterised in that** the rinsing electrolyte located in the electrode compartments contains the stated substances in aqueous solution in a concentration of 1 to 30 g/l.

5. System as claimed in any one of Claims 1 to 4, **characterised in that** for passage of the bath electrolyte and/or for passage of the regeneration electrolyte through the diluate compartments (2, 22) or concentrate compartments (13, 23) respectively of at least one of the electrodialysis units (10, 20) parallel lines lead from a main feed line to these compartments.

6. System as claimed in any one of Claims 1 to 5, **characterised in that** a line system is operated in closed circuit for guiding the bath electrolyte through the diluate compartments (12, 22) of the electrodialysis units (10, 20).

7. System as claimed in Claim 6, **characterised in that** a collecting tank (30) for the electrolyte is disposed in the closed circuit line.

8. System as claimed in any one of Claims 6 or 7, **characterised in that** at least one heat exchanger is disposed in the closed circuit for the bath electrolyte.

9. System as claimed in any one of Claims 6 to 8, **characterised in that** at least one filter is disposed in the line system through which the bath electrolyte passes.

10. System as claimed in any one of Claims 1 to 9, **characterised in that** a line circuit for passing the regeneration electrolyte through the concentrate compartments (13, 23) of the first and the second electrodialysis unit (10, 20) is operated in closed circuit.

11. System as claimed in Claim 10, **characterised in that** the line system through which the regeneration electrolyte passes has a collecting tank (30).

12. System as claimed in any one of Claims 1 to 11, **characterised in that** a closed circuit line is provided for passing the rinsing electrolyte through the electrode compartments (11, 14,21,24).

## Revendications

1. Système de régénération par électrodialyse d'un électrolyte de bain non parcouru par un courant, avec une première unité d'électrodialyse et une deuxième (10, 20) comportant chacune un compartiment à électrolyte dilué (12, 22) pour le passage de l'électrolyte de bain et un compartiment à électrolyte concentré (13, 23) pour le passage d'un électrolyte régénéré et coopérant avec deux électrodes, une anode (An) et une cathode (Ka1, Ka2), la première unité d'électrodialyse (10) possédant des compartiments à électrolyte dilué (12) séparés des compartiments à électrolyte concentré (13) du côté de la cathode par des membranes (mK) perméables sélectivement aux cations monovalents et du côté de l'anode par des membranes (A) perméables sélectivement à tous les anions, la deuxième unité d'électrodialyse (20) possédant des compartiments à électrolyte dilué (22) séparés des compartiments à électrolyte concentré (23) du côté de la cathode par des membranes (mA) perméables sélectivement aux anions monovalents et du côté de l'anode par des membranes (K) perméables sélectivement à tous les cations, les compartiments à électrolyte dilué (12) de la première unité d'électrodialyse (10) communiquant en série avec les compartiments à électrolyte dilué (22) de la deuxième unité d'électrodialyse (20) par des premières conduites (313, 314, 34, 341, 342) pour l'acheminement successif de l'électrolyte de bain et les compartiments à électrolyte concentré (13) de la première unité d'électrodialyse (10) communiquant avec les compartiments à électrolyte concentré (23) de la deuxième unité d'électrodialyse (20) par des deuxièmes conduites (413, 414, 42, 421, 422) pour le passage successif de l'électrolyte de régénération,
dans lequel sont prévus pour les électrodes (An, Ka1, Ka2) des compartiments d'électrode (11, 14, 21, 24) respectifs séparés par des membranes des compartiments limitrophes et pouvant être irrigués avec un électrolyte de rinçage par des troisièmes conduites (51) et dans lequel est prévu dans un compartiment d'électrode (14, 24) contigu à l'un des compartiments des deux unités d'électrodialyse (10, 20) une électrode (An) agissant dans les deux unités d'électrodialyse (10, 20).

2. Système selon la revendication 1, **caractérisé en ce que** l'électrode agissant dans les deux unités d'électrodialyse (10, 20) est une anode (An).

3. Système selon l'une des revendications 1 ou 2, **caractérisé en ce que** les compartiments d'électrode contiennent un électrolyte de rinçage qui se compose d'une solution aqueuse de Na₂SO₄, K₂SO₄ et/ou Na₂PO₃.

4. Système selon la revendication 3, **caractérisé en ce que** l'électrolyte de rinçage présent dans les compartiments d'électrode contient les substances indiquées en solution aqueuse à une concentration de 1 à 30 g/l.

5. Système selon l'une des revendications 1 à 4, **caractérisé en ce qu'**en vue du passage de l'électrolyte de bain et/ou en vue du passage de l'électrolyte de régénération à travers les compartiments à électrolyte dilué (12, 22) et respectivement les compartiments à électrolyte concentré (13, 23) de l'une au moins des unités d'électrodialyse (10, 20), des conduites parallèles sont amenées à ces compartiments à partir d'une conduite d'arrivée principale.

6. Système selon l'une des revendications 1 à 5, **caractérisé en ce qu'**un système de conduites acheminant l'électrolyte de bain à travers les compartiments à électrolyte dilué (12, 22) des unités d'électrodialyse (10, 20) est monté en circuit.

7. Système selon la revendication 6, **caractérisé en ce qu'**un réservoir collecteur (30) est disposé dans le circuit de conduites pour l'électrolyte de bain.

8. Système selon l'une des revendications 6 ou 7, **caractérisé en ce qu'**au moins un échangeur de chaleur est disposé dans le circuit de l'électrolyte de bain.

9. Système selon l'une des revendications 6 à 8, **caractérisé en ce qu'**au moins un filtre est disposé dans le système de conduites acheminant l'électrolyte de bain.

10. Système selon l'une des revendications 1 à 9, **caractérisé en ce qu'**un circuit de conduites pour le passage de l'électrolyte de régénération à travers les compartiments à électrolyte concentré (13, 23) de la première unité d'électrodialyse et de la deuxième (10, 20) est monté en circuit.

11. Système selon la revendication 10, **caractérisé en ce que** le système de conduites acheminant l'électrolyte de régénération comprend un réservoir collecteur (40).

12. Système selon l'une des revendications 1 à 11, **caractérisé en ce qu'**un circuit de conduites est prévu pour faire passer l'électrolyte de rinçage à travers les compartiments d'électrode (11, 14, 21, 24).
